# EUROPEAN PATENT SPECIFICATION

(11) **EP 3 544 382 B1**
(45) Date of publication and mention of the grant of the patent: **23.12.2020**
(21) Application number: 18163774.5
(22) Date of filing: 23.03.2018
(51) Int. Cl.: H05B 45/37

(54) **POWER CONTROL DEVICE**
STROMSTEUERUNGSVORRICHTUNG
DISPOSITIF DE COMMANDE DE PUISSANCE

(43) Date of publication of application: 25.09.2019
(73) Proprietor: Alfasemi Inc., Taipei City 114 (TW)
(72) Inventor: SHIH, Te-Lung, Taipei City 114 (TW); LIN, Kuo-Chao, Taipei City 116 (TW)
(74) Representative: Dehns

(56) References cited:
- US-A1- 2013 147 350
- US-A1- 2017 257 928

## Description

### BACKGROUND OF THE INVENTION

### 1. Field of the Invention

The present invention relates to a power control device, in particular, adapted to convert a supply power from an AC power source, a conventional control gear (CCG) or an electronic control gear (ECG) into a suitable power for an LED load.

### 2. Description of Related Art

In recent years, solid-state lighting (SSL) is highly developed, and it uses a light-emitting diode (LED), an organic light-emitting diodes (OLED), or a polymer light-emitting diode (PLED) as sources of illumination rather than electrical filaments or fluorescent lamps.

A protective circuit such as a low-dropout circuit is generally used to protect the LED from being damaged by an excess power from the power source.

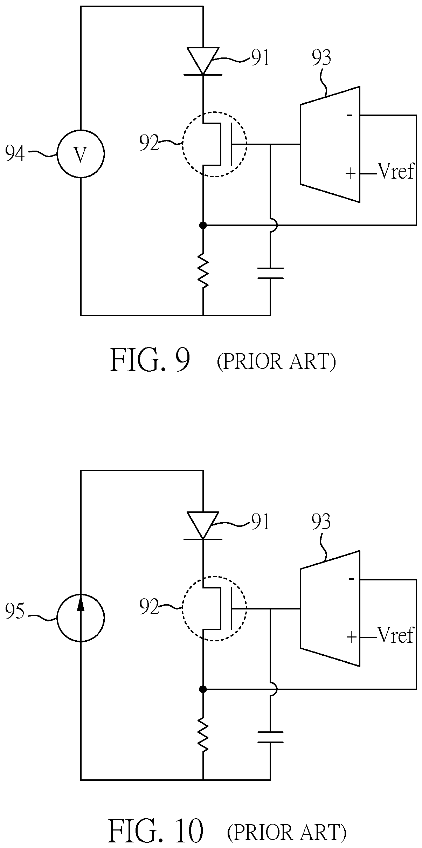

FIG. 9 shows a typical low-dropout circuit with a voltage power source 94. As shown, an LED 91 is connected to a transistor 92. An amplifier 93 is designed to observe the presence of an excess power from the voltage power source 94, and accordingly change the resistance of the transistor 92, in order to regulate the current flowing through the LED.

However, the typical low-dropout circuit may operate abnormally when it uses a current power source.

FIG. 10 shows a typical low-dropout circuit with a current power source 95. In this case, the current power source 95 keeps providing the same amount of the current instinctively even if the resistance of the transistor 92 is changed by the amplifier 93. The excess current will be accumulated at the drain of the transistor 92, inducing an over-high voltage to damage the transistor 92.

Therefore, a current power source is not applicable to the prior art protective circuit for LED.

However, a current power source is commonly used for the electrical filaments or the fluorescent lamps. There will be benefits if the LED can be applied with the current power source, so that the LED can replace the electrical filaments or the fluorescent lamps, and the LED can be directly installed on a conventional holder originally designed for the electrical filaments or the fluorescent lamps.

In known patent documents, U.S. Patent Application Publication Number No. US 2017/0257928 A1 discloses a "solid-state lighting operable with ballasts and line voltages without ambiguity" and U.S. Patent Application Publication Number No. US 2013/0147350 A1 discloses a "light emitting apparatus", which are provided to address similar technical issues.

Therefore, it is desirable to provide a circuit device to solve the aforementioned problems and realize the aforementioned functions.

### SUMMARY OF THE INVENTION

The present invention provides a power control device 100 adapted to convert a supply power from an AC power source, a conventional control gear (CCG) or an electronic control gear (ECG) to a suitable power for an LED load.

The power control device of the present invention includes a filter module, a current module, a type-check module, a voltage-check module and a control module. The current module is connected to the filter module and has a first end adapted to be connected to an LED load, and configured to provide a temporary current serving as a filament current at the first end. The type-check module is connected to the filter module, and configured to detect a type of a power source. The voltage-check module is connected to the filter module, and configured to detect an overvoltage. The control module is connected to the current module, the type-check module and the voltage-check module, and configured to turn on or turn off the current module according to the type-check module and the voltage-check module. The type-check module includes: a current-mode-check module connected to the filter module, a voltage-mode-check module connected to the filter module, and a latch having two input ends connected to the current-mode-check module and the voltage-mode-check module respectively, and an output end connected to the type-check node.

In one aspect, the power control device makes it possible to replace a fluorescent lamp by an LED load, while the LED load can still use the electrical ballast (CCG or ECG) originally used for fluorescent lamp, and thus the holder installed with the electrical ballast (CCG or ECG) can be reused, even without modification, for the LED load. It is appreciated that the present invention provides economic and environmental benefits.

In another aspect, the power control device can avoid unnecessary power consumption due to operation in an overvoltage by detecting the presence of the overvoltage. This is beneficial for power saving.

Other features and functions of the present invention will become more apparent from the following detailed description when taken in conjunction with the accompanying drawings.

### BRIEF DESCRIPTION OF THE DRAWINGS

FIG. 1 shows a block diagram of the lighting system according to another embodiment of the present invention;
FIG. 2 shows a block diagram of the power control device according to an embodiment of the present invention;
FIG. 3 shows a circuit diagram of the filter module according to an embodiment of the present invention;
FIG. 4 shows a circuit diagram of the current module according to an embodiment of the present invention;
FIG. 5 shows a block diagram of the type-check module according to an embodiment of the present invention;
FIG. 6 shows a circuit diagram of the type-check module according to an embodiment of the present invention;
FIG. 7 shows a circuit diagram of the voltage-check module according to an embodiment of the present invention;
FIG. 8 shows a circuit diagram of the control module according to an embodiment of the present invention;
FIG. 9 shows a typical low-dropout circuit with a voltage power source; and
FIG. 10 shows a typical low-dropout circuit with a current power source.

### DETAILED DESCRIPTION OF THE PREFERRED EMBODIMENT

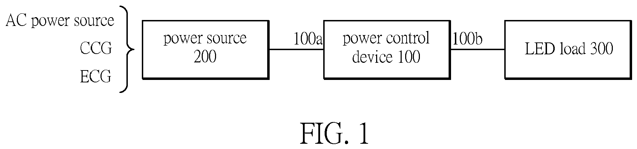

FIG. 1 shows a block diagram of the lighting system 1 according to another embodiment of the present invention.

The lighting system 1 includes a power control device 100, a power source 200 and an LED load 300.

The power control device 100 has an input end 100a connected to the power source 200, and an output end 100b connected to an LED load 300. The power control device 100 is configured to convert a supply power from the power source 200 into a suitable power for the LED load 300, whenever the power source 200 is an AC power source, a conventional control gear (CCG) or an electronic control gear (ECG). The CCG and the ECG are each regarded as an "electrical ballast".

However, since the electrical ballast is originally used for a fluorescent lamp, a conventional AC-to-DC converter for LED may have an incompatible input impedance for the electrical ballast when the conventional AC-to-DC converter connected to the electrical ballast, and the electrical ballast will refuse to provide power to the conventional AC-to-DC converter.

Accordingly, in the present invention, the power control device 100 is designed to have an input impedance more than 500k ohm when the power source 200 is an AC power source, and an input impedance between 2 to 40 ohm when the power source 200 is an electrical ballast. In other words, when power control device 100 is connected to the AC power source, the AC power source will "see" the power control device 100 having an input impedance more than 500k ohm. While, when power control device 100 is connected to the electrical ballast, the electrical ballast will "see" the power control device 100 having an input impedance approximately lower than 100 ohm.

For this purpose, the power control device 100 is designed to perform a switch mechanism which changes the input impedance of the power control device 100 according to the types of the power source 200.

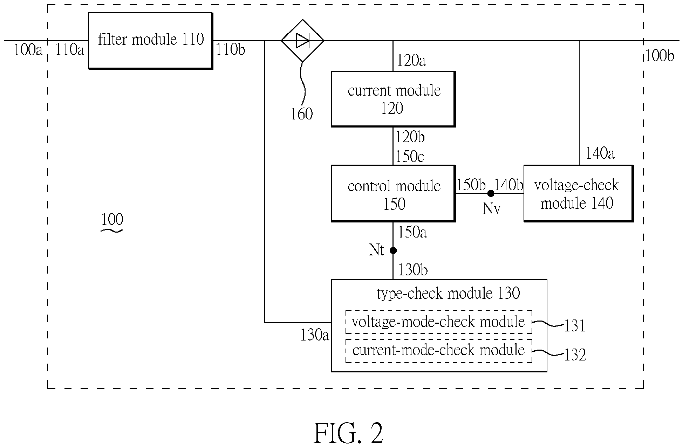

FIG. 2 shows a block diagram of the power control device 100 according to an embodiment of the present invention.

The power control device 100 includes a filter module 110, a current module 120, a type-check module 130, a voltage-check module 140 and a control module 150.

The filter module 110 has an input end 110a and an output end 110b. The input end 110a serves as the input end 100a of the power control device 100.

The current module 120 has a first end 120a (indirectly) connected to the output end 110b of the filter module 110, and a second end 120b. The current module 120 is configured to provide a temporary current in case the power control device 100 is connected to a power source 200 of an electrical ballast.

The type-check module 130 has an input end 130a connected to the output end 110b of the filter module 110, and an output end 130b connected to a type-check node Nt. The type-check module 130 is configured to detect a type of a power source 200, which may be an AC power source, a CCG or an ECG.

The voltage-check module 140 has an input end 140a (indirectly) connected to the output end 110b of the filter module 110, and an output end 140b connected to a voltage-check node Nv. The voltage-check module 140 is configured to detect an overvoltage outputted from the filter module 110.

The control module 150 has a first end 150a connected to the type-check node Nt further to the type-check module 130, a second end 150b connected to the voltage-check node Nv further to the voltage-check module 140, and a third end 150c connected to the second end 120b of the current module 120. The control module 150 is configured to turn on or turn off the current module 120 according to outputs (that is, detected results) from the type-check module 130 and the voltage-check module 140.

The functions of the aforementioned modules will be discussed respectively in the following description. It is to be understood that the structures of the modules are only illustrative examples, and other structures can be made to implement the functions of the modules.

### (Filter module)

The filter module 110 takes effect when the power source 200 is an AC power source, which is typically a low-frequency voltage source. The filter module 110 provides an AC impedance to filter out the noise from the power source 200 to the power control device 100, in order to reduce the electromagnetic interference (EMI). The filter module 110 may be an EMI filter, preferably with a preset impedance.

However, the filter module 110 becomes a preliminary impedance for an electrical ballast (CCG or ECG), which is typically a high-frequency current source. The electrical ballast will refuse to provide power to the power control circuit 100 in the presence of such a preliminary impedance. Hence, in the present invention, the filter module 110 is working with other modules that can change the preliminary impedance of the filter module 110.

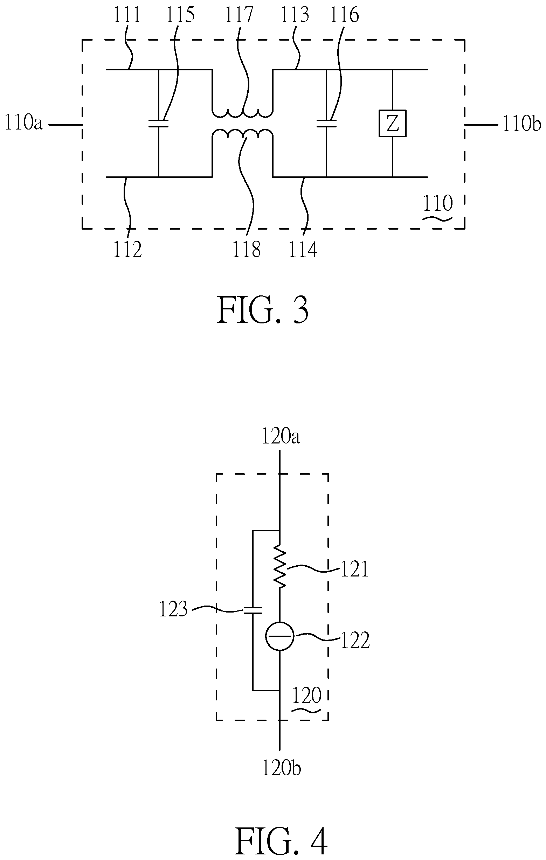

FIG. 3 shows a circuit diagram of the filter module 110 according to an embodiment of the present invention.

The filter module 110 has an input end 110a and an output end 110b. As previously shown in FIG 1, the input end 110a serves as the input end 100a of the power control device 100.

The filter module 110 includes a first input rail 111, a second input rail 112, a first output rail 113, a second output rail 114, an input capacitor 115 connected between the first input rail 111 and the second input rail 112, an output capacitor 116 connected between the first output rail 113 and the second output rail 114, a first inductor 117 connected between the first input rail 111 and the first output rail 113, and a second inductor 118 connected between the second input rail 112 and the second output rail 114. There is further a preset impedance Z connected between the first output rail 113 and the second output rail 114.

In this case, the filter module 110 forms an EMI filter with the preset impedance Z. However, it is to be understood that the filter module 110 may be any other filter as long as it can filter out the noise from the AC power source.

In the filter module 110, the first input rail 111 and the second input rail 112 are used together as the input end 110a, and the first output rail 113 and the second output rail 114 are used together as the output end 110b. The peripheral modules may connected to the input end 110a through the first input rail 111 and/or the second input rail 112, or the output end 110b through the first output rail 113 and/or the second output rail 114 in suitable way.

### (Bridge Diode)

The bridge diode 160 is used to convert an AC power source into a DC power source suitable for the LED load 300. The bridge diode 160 may be any conventional bridge diode, so the detailed description of the structure of the bridge diode is omitted here.

As shown in FIG. 1, the bridge diode 160 is connected between the output end 110b of the filter module 110 and the output end 100b of the power control device 100.

It is to be understood that the function of the bridge diode 160 may be implement by any other circuit, or the bridge diode 160 may be integrated in other modules of the present invention. FIG. 1 shows the bridge diode 160 only for the convenience of explanation.

### (Current module)

The current module 120 is configured to provide a temporary current in case the power source 200 is an electrical ballast.

In the prior art, the electrical ballast is originally used for a fluorescent lamp. The electrical ballast has to confirm the presence of the fluorescent lamp by detecting a filament current from the fluorescent lamp in a preheating stage, and then it agrees to enter an ignition stage, and then a running stage to provide power to the fluorescent lamp.

However, the power control device 100 of the present invention is used to introduce power from an electrical ballast originally designed for a fluorescent lamp to the LED load 300. Since the LED load 300 does not provide a filament current, the present invention uses the current module 120 to provide a temporary current to "deceive" the electrical ballast as if there is a fluorescent lamp.

The amount of the temporary current provided by the current module 120 is set according to the desired output power (Watt) of the power control device 100, so the current module 120 is preferably a programmable filament current setting module.

FIG. 4 shows a circuit diagram of the current module 120 according to an embodiment of the present invention.

The current module 120 has a first end 120a and a second end 120b. As previously shown in FIG. 1, the first end 120a is connected to the output end 100b of the power control device 100, and indirectly connected to the output end 110b of the filter module 110, through the bridge diode 160 in this case.

The current module 120 includes a series connection of a resistor 121 and a programmable current source 122, and a capacitor 123 connected in parallel to the series connection.

It is to be understood that the current module 120 may be any other current source as long as it can provide an active current.

### (Type-check module)

The type-check module 130 is configured to detect a type of a power source 200, which may be an AC power source, a CCG or an ECG. The CCG or the ECG is regarded as an "electrical ballast".

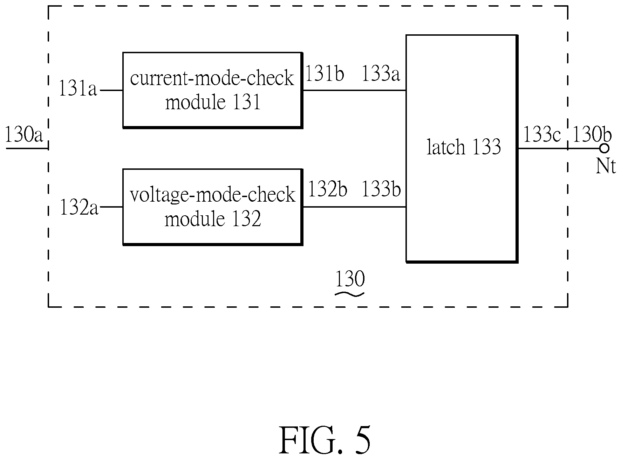

FIG. 5 shows a block diagram of the type-check module 130 according to an embodiment of the present invention.

The type-check module 130 includes a current-mode-check module 131, a voltage-mode-check module 132 and a latch 133.

Structurally, the current-mode-check module 131 has an input end 131a connected to the output end 110b of the filter module 110 (in FIG. 1), and an output end 131b.

Similarly, the voltage-mode-check module 132 has an input end 132a connected to the output end 110b of the filter module 110 (in FIG. 1), and an output end 132b.

The latch 133 has a first input end 133a connected to the output end 131b of the current-mode-check module 131, a second input end 133b connected to the output end 132b of the voltage-mode-check module 132, and an output end 133c connected to the type-check node Nt.

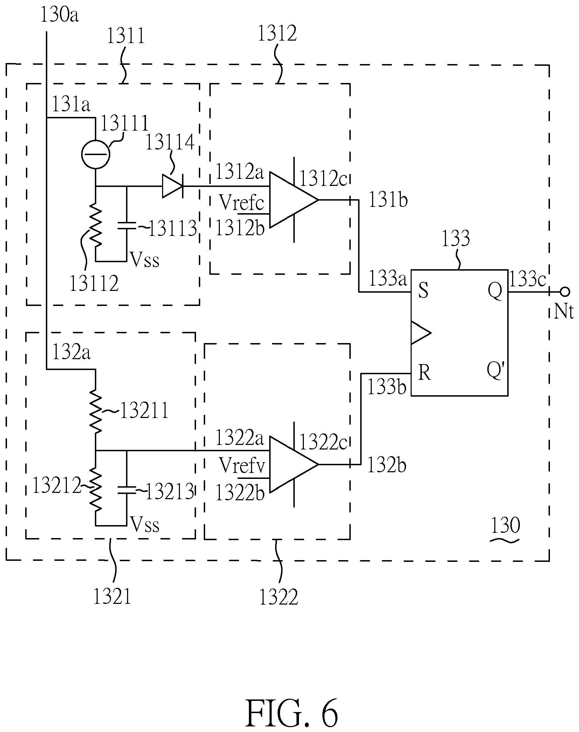

FIG. 6 shows a circuit diagram of the type-check module 130 according to an embodiment of the present invention. The sub-modules will be discussed respectively in the following description.

### [Current-mode-check module]

The current-mode-check module 131 is configured to output a logic-1 when the power source 200 is an electrical ballast. Preferably, the current-mode-check module 131 is further configured to output a logic-0 when the power source 200 is an AC power source.

Structurally, the current-mode-check module 131 includes a current-to-voltage converter 1311, and a current-mode comparator 1312 having a first input end 1312a connected to the current-to-voltage converter 1311, a second input end 1312b connected to a current-mode reference voltage Vrefc, and an output end 1312c (serving as the output end 131b of the current-mode-check mode 131) connected to the latch 133.

In one embodiment, the current-to-voltage converter 1311 includes a current source 13111, a resistor 13112, a capacitor 13113, and a diode 13114 having an anode and a cathode.

The current source 13111 is connected between the input end 131a of the current-mode-check module 131 and the anode of the diode 13114. The resistor 13112 is connected between the anode of the diode 13114 and the low voltage Vss. The capacitor 13113 is connected in parallel to the resistor 13112. The cathode of the diode 1311 is connected to the first input end 1312a of the current-mode comparator 1312.

Hence, the current from the input end 131a is converted into the voltage across the resistor 13112, and is then transmitted through the diode 13114 to the first input end 1312a of the current-mode comparator 1312.

In one embodiment, the current-mode comparator 1312 includes an amplifier 13121 configured to compare the voltage at the first input end 1312a with the reference voltage Vrefc at the second input end 1312b, and output a logic-1 at the output end 1312c if the voltage at the first input end 1312a is larger than the voltage at the second input end 1312b.

While, it is to be understood that the desired function of the current-mode-check module 131 may be implemented by any other circuit that can detect a current source such as an electrical ballast.

### [Voltage-mode-check module]

The voltage-mode-check module 132 is configured to output a logic-1 when the power source 200 is an AC power source. Preferably, the voltage-mode-check module 132 is further configured to output a logic-0 when the power source 200 is an electrical ballast.

Structurally, the voltage-mode-check module 132 includes a voltage-to-voltage converter 1321, and a voltage-mode comparator 1322 having a first input ends 1322a connected to the voltage-to-voltage converter 1321, a second input end 1322b connected to a voltage-mode reference voltage Vrefv, and an output end 1322c (serving as the output end 132b of the voltage-mode-check mode 132) connected to the latch 133.

In one embodiment, the voltage-to-voltage converter 1321 includes a first resistor 13211, a second resistor 13212 and a capacitor 13213.

The first resistor 13211 is connected between the input end 132a of the voltage-mode-check module 132 and the first input end 1322a of the voltage-mode comparator 1322. The second resistor 13212 is connected between the first input end 1322a of the voltage-mode comparator 1322 and the low voltage Vss. The capacitor 13213 is connected in parallel to the second resistor 13212.

Hence, the voltage at the input end 131a of the voltage-mode-check module 132 is divided by the first resistor 13211 and the second resistor 13212, and appears at the input end 1322a of the voltage-mode comparator 1322.

In one embodiment, the voltage-mode comparator 1322 includes an amplifier 13122 configured to compare the voltage at the input end 1322a with the reference voltage Vrefv at the input end 1322b, and output a logic-1 at the output end 1322c if the voltage at the input end 1322a is larger than the voltage at the input end 1322b.

While, it is to be understood that the desired function of the current-mode-check module 131 may be implemented by any other circuit that can detect a voltage source such as an AC power source.

### [Latch]

The latch 133 is configured to output a logic-1 when the current-mode-check module 131 outputs a logic-1. On the other hand, the latch 133 is preferably configured to output a logic-0 when the current-mode-check module 131 outputs a logic-0.

In one embodiment, the latch 133 may be an SR-latch.

An SR-latch typically has two inputs S and R, and two outputs Q and Q'. The SR-latch can hold the values of the two outputs Q and Q', so the two outputs Q and Q' are regarded as two stable states stored in the SR-latch. The SR-latch can also change the two outputs Q and Q' by the two inputs S and R. When the input S is logic-1 and the input R is logic-0, the output Q will be logic-1 (after the next clock pulse). When the input S is logic-0 and the input R is logic-1, the output Q will be logic-0 (after the next clock pulse). While, the output Q' is the inverse state of the output Q anyway.

It is thus appreciated that the SR-latch is useful to implement the desired function of the latch 133. While, it is to be understood that the desired function of the latch 33 may be implemented by any other logic circuit.

As shown in FIG. 6, when the latch 133 is implemented by the SR-latch, the input end 133a is used to receive the input S from the output end 1312c of the current-mode comparator 1312, the input end 133b is used to receive the input R from the output end 1322c of the voltage-mode comparator 1312, and the output end 133c is used to send the output Q to the type-check node Vt.

Therefore, the functions and the structures of the current-mode-check module 131, the voltage-mode-check module 132 and the latch 133 included in the type-check module 130 have been discussed respectively.

### (Voltage-check module)

In order to avoid unnecessary power consumption due to operation in an overvoltage in the lighting power system 1 as shown in FIG. 1, the present invention uses the voltage-check module 140 to detect an overvoltage outputted from the filter module 110.

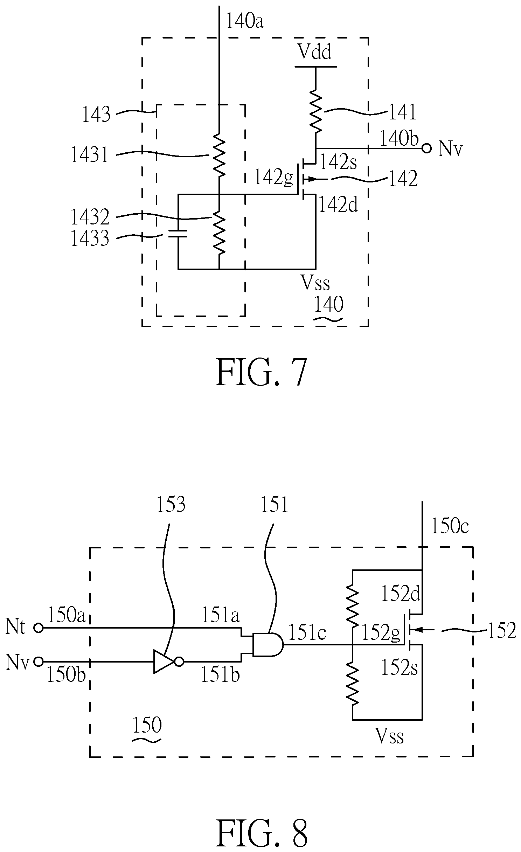

FIG. 7 shows a circuit diagram of the voltage-check module 140 according to an embodiment of the present invention.

The voltage-check module 140 has an input end 140a and an output end 140b.

As previously shown in FIG. 1, the input end 140a is connected to the output end 100b of the power control device 100, and indirectly connected to the output end 110b of the filter module 110 through the bridge diode 160 in this case. The output end 140b is connected to a voltage-check node Nv.

The voltage-check module 140 includes an output resistor 141, a PMOS-transistor 142 and a voltage divider 143.

The output resistor 141 is connected between the high voltage VDD and the voltage-check node Nv.

The PMOS-transistor 142 has a gate end 142g, a source end 142s connected to the voltage-check node Nv, and a drain end 142d connected to the low voltage VSS.

The voltage divider 143 includes a first resistor 1431 connected between the input end 140a of the voltage-check module 140 and the gate end 142g of the PMOS-transistor 142, a second resistor 1432 connected between the gate end 142g of the PMOS-transistor 142 and the low voltage VSS, and a capacitor 1433 also connected between the gate end 142g of the PMOS-transistor 142 and the low voltage VSS.

The voltage from the input end 140a of the voltage-check module 140 is divided by the series of the first resistor 1431 and the second first resistor 1432, and the fraction of the voltage across the second first resistor 1432 is hold in the capacitor 1433, and then read by the PMOS-transistor 142.

If the voltage difference Vsg between the source end 142s and the gate end 142g is larger than the threshold voltage Vth of the PMOS-transistor 142 (that is, Vsg > Vth), the PMOS-transistor 142 will turn on and output a detected result to the voltage-check node Nv.

Hence, the overvoltage can be detected based on the comparison between Vsg and Vth, and the detected result is then sent to the control module 150 through the voltage-check node Nv for the control mode 150 to adjust the power consumption.

It is to be understood that the voltage-check module 140 may be any other comparator as long as it can provide a comparison between an input voltage and a preset threshold to detect an overvoltage.

### (Control module)

As discussed previously, the power control device 100 is designed to perform a switch mechanism which changes the input impedance of the power control device 100.

The control module 150 is configured to perform such a switch mechanism by turning on or turning off the current module 120 according to outputs (that is, detected results) from the type-check module 130 and the voltage-check module 140.

In particular, the control module 150 is configured to turn on the current module 120 when the type-check module 130 detects an electrical ballast, and turn off the current module 120 when the type-check module 130 detect an AC power source.

The control module 150 is also configured to turn off the current module 120 when the voltage-check module 140 detects an overvoltage.

In other words, the control module 150 turns off the current module 120 in the presence of an electrical ballast and/or an overvoltage. ???

Structurally, the control module 150 has a first end 150a connected to the type-check node Nt further to the type-check module 130, a second end 150b connected to the voltage-check node Nv further to the voltage-check module 140, and a third end 150c connected to the second end 120b of the current module 120 (in FIG. 1).

FIG. 8 shows a circuit diagram of the control module 150 according to an embodiment of the present invention.

The control module 150 includes a logic gate 151 and a switch element 152. The logic gate 151 has a first input end 151a connected to the type-check node Nt, a second input end 151b (indirectly) connected to the voltage-check node Nv, and an output end 151c. The switch element 152 has a control end 152g connected to the output end 151c of the logic gate 151 and the switch element 152 determines the action of the current module 120 (in FIG. 1).

In one embodiment, the logic gate 151 may be an AND-gate 1511. The switch element 152 may be an NMOS-transistor 152 having a gate end 152g connected to the output end 151c of the AND-gate 151, a drain end 152d connected to the second end 120b of the current module 120 (in FIG. 1) and a source end 152s connected to the low voltage VSS.

The AND-gate 151 is used, for the sake of circuit simplification, to summarize the outputs (that is, the detected results) from the type-check module 130 and the voltage-check module 140, in order to control the NMOS-transistor 152. Other logic gate is also applicable for the sake of circuit simplification in other embodiments.

When the gate end 152g of the NMOS-transistor 152 is logic-0, the NMOS-transistor 152 is turned off, and thus the current module 120 (in FIG. 1) is turned off as well.

In the present invention, since the current module 120 should be turn off in the presence of an electrical ballast and/or an overvoltage???, when either the first input 151a or the second input 151b of the AND-gate 151 is a logic-0, the AND-gate 151 will output a logic-0 to the NMOS-transistor 152, thereby turning off the current module 120.

The first input 151a of the AND-gate 151 is connected to the type-check node Nt of which the voltage depends on the type-check module 130 (in FIG. 6). The type-check module 130 will give the type-check node Nt a logic-1 when the type-check module 130 detects an electrical ballast, and a logic-0 when the type-check module 130 detects an AC power source.

The logic at the type-check node Nt meets with the desired logic to control the NMOS-transistor 152, so the type-check node Nt can be directly connected to the first input 151a of the AND-gate 151.

However, the second input 151b of the AND-gate 151 is (indirectly) connected to the voltage-check node Nv of which the voltage depends on the voltage-check module 140 (in FIG. 7). The voltage-check module 140 will give the voltage-check node Nv a logic-1 when the voltage-check module 140 detects an overvoltage.

In this case, the logic at the voltage-check node Nv is quite the opposite to the logic to control the NMOS-transistor 152, so there has to be an inverter 153 connected between the voltage-check node Nv and the second input 151b of the AND-gate 151, in order to invert the voltage-check node Nv to fit the logic to control the NMOS-transistor 152.

The logic of the control module 150 of the present invention is summarized as follows:
(a) When the power control device 100 is connected to an electrical an AC power source, the control module 150 will turn off the current module 120.
(b) When the power control device 100 operates in an overvoltage, the control module 150 will also turned off the current module 120.
(c) Only when the power control device 100 is connected to an electrical ballast as well as operates in a normal voltage will the control module 150 turn on the current module 120.

It is to be understood that the control module 150 may be any other logic circuit as long as it can provide the aforementioned logic to control the current module 120 according to the detection of an electrical ballast and/or an overvoltage.

In the description of the present invention, a "connection" of two elements may refer to a "direct connection" where there is no intervened element between them, or an "indirect connection" where there is an intervened element between them. The relative concepts "logic-1" and "logic-0" refer to a relatively high voltage and a relatively low voltage respectively.

In conclusion, the present invention provides a power control device 100 adapted to convert a supply power from an AC power source, a conventional control gear (CCG) or an electronic control gear (ECG) to a suitable power for an LED load.

In one aspect, the power control device 100 makes it possible to replace a fluorescent lamp by an LED load 300, while the LED load 300 can still use the electrical ballast (CCG or ECG) originally used for fluorescent lamp, and thus the holder installed with the electrical ballast (CCG or ECG) can be reused, even without modification, for the LED load. It is appreciated that the present invention provides economic and environmental benefits.

In another aspect, the power control device 100 can avoid unnecessary power consumption due to operation in an overvoltage by detecting the presence of the overvoltage. This is beneficial for power saving.

Although the present invention has been explained in relation to its preferred embodiment, it is to be understood that many other possible modifications and variations can be made.

## Claims

1. A power control device (100) having a filter module (110) connectable to a power source (200), **characterized by** comprising:
a current module (120) connected to the filter module (110) and having a first end (120a) adapted to be connected to an LED load (300), the current module (120) being configured to provide a temporary current serving as a filament current at the first end (120a);
a type-check module (130) connected to the filter module (110), the type-check module (130) being configured to detect a type of the power source (200);
a voltage-check module (140) connected to the filter module (110); the voltage-check module (140) being configured to detect an overvoltage; and
a control module (150) connected to the current module (120), the type-check module (130) and the voltage-check module (140), the control module (150) being configured to turn on or turn off the current module (120) according to the type-check module (130) and the voltage-check module (140),
wherein the type-check module (130) includes:
a current-mode-check module (131) connected to the filter module (110);
a voltage-mode-check module (132) connected to the filter module (110); and
a latch (133) having two input ends (133a, 133b) connected to the current-mode-check module (131) and the voltage-mode-check module (132) respectively, and an output end (133c) connected to the type-check node (Nt).

2. The power control device (100) as claimed in claim 1, wherein
the power control device (100) has an input end (100a) adapted to be connected to the power source (200) and an output end (100b) adapted to be connected to the LED load (300); and
the power source is an AC power source or an electrical ballast.

3. The power control device (100) as claimed in claim 1 or 2, wherein the control module (150) is configured to:
turn on the current module (120) when the type-check module (130) detects a conventional control gear (CCG) or an electronic control gear (ECG); and
turn off the current module (120) when the type-check module (130) detect an AC power source.

4. The power control device (100) as claimed in any of claims 1 to 3, wherein the control module (150) is configured to turn off the current module (120) when the voltage-check module (140) detect a overvoltage.

5. The power control device (100) as claimed in any of claims 1 to 4, wherein the control module (150) includes:
a logic gate (151) having two input ends (151a, 151b) connected to the type-check node (Nt) and a voltage-check node (Nv) of the voltage-check module (140) respectively, and an output end (151c); and
a switch (152) having a control end (152g) connected to the output end (151c) of the logic gate (151), a first end (152b) and a drain end (152c).

6. The power control device (100) as claimed in claim 5, wherein the voltage-check module (140) includes:
a resistor (141) connected between a high voltage (VDD) and the voltage-check node (Nv);
a PMOS-transistor (142) having a gate end (142g), a source end (142s) connected to the voltage-check node (Nv), and a drain end (142d); and
a voltage divider (143) connected to the gate end (142g) of the PMOS-transistor (142).

7. The power control device (100) as claimed in any preceding claim, wherein the current-mode-check module (131) is configured to output a logic-1 when the power source (200) is a conventional control gear (CCG) or an electronic control gear (ECG); and
the voltage-mode-check module (132) is configured to output a logic-1 when the power source (200) is an AC power source.

8. The power control device (100) as claimed in any preceding claim, wherein the latch (133) is configured to output a logic-1 when the current-mode-check module (131) outputs a logic-1.

9. The power control device (100) as claimed in any preceding claim, wherein the latch (133) is an SR-latch.

10. The power control device (100) as claimed in any preceding claim, wherein the current-mode-check module (131) includes:
a current-to-voltage converter (1311); and
a current-mode comparator (1312) having two input ends (1312a, 1312b) connected to the current-to-voltage converter (1311) and a current-mode reference voltage (Vrefc) respectively, and an output end (1312c) connected to the latch (133).

11. The power control device (100) as claimed in any preceding claim, wherein the voltage-mode-check module (132) includes:
a voltage-to-voltage converter (1321); and
a voltage-mode comparator (1322) having two input ends (1322a, 1322b) connected to the voltage-to-voltage converter (1321) and a voltage-mode reference voltage (Vrefv) respectively, and an output end (1322c) connected to the latch (133).

12. The power control device (100) as claimed in any preceding claim, wherein the current module (120) includes:
a series connection of a resistor (121) and a programmable current source (122); and
a capacitor (123) connected in parallel to the series connection.

13. The power control device (100) as claimed in any preceding claim, wherein the filter module (110) includes an EMI filter with a preset impedance Z.

14. The power control device (100) as claimed in any of claims 2 to 13, wherein the power control device (100) has an input impedance more than 500k ohm seen by the AC power source, and
an input impedance between 2 to 40 ohm seen by the conventional control gear (CCG) or the electronic control gear (ECG).

## Patentansprüche

1. Stromsteuerungsvorrichtung (100) mit einem Filtermodul (110), das mit einer Stromquelle (200) verbunden werden kann, **dadurch gekennzeichnet, dass** sie umfasst:
ein Strommodul (120), das mit dem Filtermodul (110) verbunden ist und ein erstes Ende (120a) aufweist, das ausgestaltet ist, mit einer LED-Last (300) verbunden zu werden, wobei das Strommodul (120) konfiguriert ist, einen temporären Strom bereitzustellen, der als ein Filamentstrom an dem ersten Ende (120a) dient;
ein Typprüfmodul (130), das mit dem Filtermodul (110) verbunden ist, wobei das Typprüfmodul (130) konfiguriert ist, einen Typ der Stromquelle (200) zu erfassen;
ein Spannungsprüfmodul (140), das mit dem Filtermodul (110) verbunden ist; wobei das Spannungsprüfmodul (140) konfiguriert ist, eine Überspannung zu erfassen; und
ein Steuermodul (150), das mit dem Strommodul (120), dem Typprüfmodul (130) und dem Spannungsprüfmodul (140) verbunden ist, wobei das Steuermodul (150) konfiguriert ist, das Strommodul (120) gemäß dem Typprüfmodul (130) und dem Spannungsprüfmodul (140) ein- und auszuschalten,
wobei das Typprüfmodul (130) beinhaltet:
ein Strommodusprüfmodul (131), das mit dem Filtermodul (110) verbunden ist;
ein Spannungsmodusprüfmodul (132), das mit dem Filtermodul (110) verbunden ist; und
ein Latch (133), das zwei Eingangsenden (133a, 133b), die mit dem Strommodusprüfmodul (131) bzw. dem Spannungsmodusprüfmodul (132) verbunden sind, und ein Ausgangsende (133c), das mit dem Typprüfknoten (Nt) verbunden ist, aufweist.

2. Stromsteuerungsvorrichtung (100) nach Anspruch 1, wobei
die Stromsteuerungsvorrichtung (100) ein Eingangsende (100a), das ausgelegt ist, mit der Stromquelle (200) verbunden zu sein, und ein Ausgangsende (100b), das ausgelegt ist, mit der LED-Last (300) verbunden zu sein, aufweist; und
die Stromquelle eine Wechselstromquelle oder ein elektrischer Ballast ist.

3. Stromsteuerungsvorrichtung (100) nach Anspruch 1 oder 2, wobei das Steuermodul (150) konfiguriert ist zum:
Einschalten des Strommoduls (120), wenn das Typprüfmodul (130) ein konventionelles Vorschaltgerät (CCG) oder ein elektronisches Vorschaltgerät (ECG) erfasst; und
Ausschalten des Strommoduls (120), wenn das Typprüfmodul (130) eine Wechselstromquelle erfasst.

4. Stromsteuerungsvorrichtung (100) nach einem der Ansprüche 1 bis 3, wobei das Steuermodul (150) konfiguriert ist, das Strommodul (120) auszuschalten, wenn das Spannungsprüfmodul (140) eine Überspannung erfasst.

5. Stromsteuerungsvorrichtung (100) nach einem der Ansprüche 1 bis 4, wobei das Steuermodul (150) beinhaltet:
ein Logik-Gate (151), das zwei Eingangsenden (151a, 151b), die mit dem Typprüfknoten (Nt) bzw. einem Spannungsprüfknoten (Nv) des Spannungsprüfmoduls (140) verbunden sind, und ein Ausgangsende (151c) aufweist; und
einen Schalter (152), der ein Steuerende (152g), das mit dem Ausgangsende (151c) des Logik-Gates (151) verbunden ist, ein erstes Ende (152b) und ein Drain-Ende (152c) aufweist.

6. Stromsteuerungsvorrichtung (100) nach Anspruch 5, wobei das Spannungsprüfmodul (140) beinhaltet:
einen Widerstand (141), der zwischen einer Hochspannung (VDD) und dem Spannungsprüfknoten (Nv) verbunden ist;
einen PMOS-Transistor (142), der ein Gate-Ende (142g), ein Source-Ende (142s), das mit dem Spannungsprüfknoten (Nv) verbunden ist, und ein Drain-Ende (142d) aufweist; und
einen Spannungsteiler (143), der mit dem Gate-Ende (142g) des PMOS-Transistors (142) verbunden ist.

7. Stromsteuerungsvorrichtung (100) nach einem vorstehenden Anspruch, wobei das Strommodusprüfmodul (131) konfiguriert ist, eine logische 1 auszugeben, wenn die Stromquelle (200) ein konventionelles Vorschaltgerät (CCG) oder ein elektronisches Vorschaltgerät (ECG) ist; und
das Spannungsmodusprüfmodul (132) konfiguriert ist, eine logische 1 auszugeben, wenn die Stromquelle (200) eine Wechselstromquelle ist.

8. Stromsteuerungsvorrichtung (100) nach einem vorstehenden Anspruch, wobei das Latch (133) konfiguriert ist, eine logische 1 auszugeben, wenn das Strommodusprüfmodul (131) eine logische 1 ausgibt.

9. Stromsteuerungsvorrichtung (100) nach einem vorstehenden Anspruch, wobei das Latch (133) ein SR-Latch ist.

10. Stromsteuerungsvorrichtung (100) nach einem vorstehenden Anspruch, wobei das Strommodusprüfmodul (131) beinhaltet:
einen Strom/Spannung-Wandler (1311); und
einen Strommoduskomparator (1312), der zwei Eingangsenden (1312a, 1312b), die mit dem Strom/Spannung-Wandler (1311) bzw. einer Strommodusreferenzspannung (Vrefc) verbunden sind, und ein Ausgangsende (1312c), das mit dem Latch (133) verbunden ist, aufweist.

11. Stromsteuerungsvorrichtung (100) nach einem vorstehenden Anspruch, wobei das Spannungsmodusprüfmodul (132) beinhaltet:
einen Spannung/Spannung-Wandler (1321); und
einen Spannungsmoduskomparator (1322), der zwei Eingangsenden (1322a, 1322b), die mit dem Spannung/Spannung-Wandler (1321) bzw. einer Spannungsmodusreferenzspannung (Vrefv) verbunden sind, und ein Ausgangsende (1322c), das mit dem Latch (133) verbunden ist, aufweist.

12. Stromsteuerungsvorrichtung (100) nach einem vorstehenden Anspruch, wobei das Strommodul (120) beinhaltet:
eine Reihenverbindung eines Widerstands (121) und einer programmierbaren Stromquelle (122), und
einen Kondensator (123), der parallel zu der Reihenverbindung verbunden ist.

13. Stromsteuerungsvorrichtung (100) nach einem vorstehenden Anspruch, wobei das Filtermodul (110) ein EMI-Filter mit einer voreingestellten Impedanz Z beinhaltet.

14. Stromsteuerungsvorrichtung (100) nach einem der Ansprüche 2 bis 13, wobei die Stromsteuerungsvorrichtung (100) eine Eingangsimpedanz von mehr als 500k Ohm, betrachtet von der Wechselstromquelle und
eine Eingangsimpedanz zwischen 2 bis 40 Ohm, betrachtet von dem konventionellen Vorschaltgerät (CCG) oder dem elektronischen Vorschaltgerät (ECG) aufweist.

## Revendications

1. Dispositif de commande de puissance (100) présentant un module de filtrage (110) pouvant être raccordé à une source de puissance (200), **caractérisé en ce qu'**il comprend :
un module de courant (120) raccordé au module de filtrage (110) et présentant une première extrémité (120a) adaptée pour être raccordée à une charge LED (300), le module de courant (120) étant configuré pour fournir un courant temporaire servant de courant de filament au niveau de la première extrémité (120a) ;
un module de vérification de type (130) raccordé au module de filtrage (110), le module de vérification de type (130) étant configuré pour détecter un type de la source de puissance (200) ;
un module de vérification de tension (140) raccordé au module de filtrage (110) ; le module de vérification de tension (140) étant configuré pour détecter une surtension ; et
un module de commande (150) raccordé au module de courant (120), au module de vérification de type (130) et au module de vérification de tension (140), le module de commande (150) étant configuré pour allumer ou éteindre le module de courant (120) conformément au module de vérification de type (130) et au module de vérification de tension (140),
dans lequel le module de vérification de type (130) inclut :
un module de vérification de mode de courant (131) raccordé au module de filtrage (110) ;
un module de vérification de mode de tension (132) raccordé au module de filtrage (110) ; et
un loquet (133) présentant deux extrémités d'entrée (133a, 133b) raccordées au module de vérification de mode de courant (131) et au module de vérification de mode de tension (132) respectivement, et une extrémité de sortie (133c) raccordée au nœud de vérification de type (Nt).

2. Dispositif de commande de puissance (100) selon la revendication 1, dans lequel
le dispositif de commande de puissance (100) présente une extrémité d'entrée (100a) adaptée pour être raccordée à la source de puissance (200) et une extrémité de sortie (100b) adaptée pour être raccordée à la charge LED (300) ; et
la source de puissance est une source de puissance CA ou un ballast électrique.

3. Dispositif de commande de puissance (100) selon la revendication 1 ou 2, dans lequel le module de commande (150) est configuré pour :
allumer le module de courant (120) lorsque le module de vérification de type (130) détecte un équipement de commande conventionnel (CCG) ou un équipement de commande électronique (ECG) ; et
éteindre le module de courant (120) lorsque le module de vérification de type (130) détecte une source de puissance CA.

4. Dispositif de commande de puissance (100) selon l'une quelconque des revendications 1 à 3, dans lequel le module de commande (150) est configuré pour éteindre le module de courant (120) lorsque le module de vérification de tension (140) détecte une surtension.

5. Dispositif de commande de puissance (100) selon l'une quelconque des revendications 1 à 4, dans lequel le module de commande (150) inclut :
une porte logique (151) présentant deux extrémités d'entrée (151a, 151b) raccordées au nœud de vérification de type (Nt) et à un nœud de vérification de tension (Nv) du module de vérification de tension (140) respectivement, et une extrémité de sortie (151c) ; et
un commutateur (152) présentant une extrémité de commande (152g) raccordée à l'extrémité de sortie (151c) de la porte logique (151), une première extrémité (152b) et une extrémité de drainage (152c).

6. Dispositif de commande de puissance (100) selon la revendication 5, dans lequel le module de vérification de tension (140) inclut :
une résistance (141) raccordée entre une haute tension (VDD) et le nœud de vérification de tension (Nv) ;
un transistor PMOS (142) présentant une extrémité de porte (142g), une extrémité de source (142s) raccordée au nœud de vérification de tension (Nv), et une extrémité de drainage (142d) ; et
un diviseur de tension (143) raccordé à l'extrémité de porte (142g) du transistor PMOS (142).

7. Dispositif de commande de puissance (100) selon une quelconque revendication précédente, dans lequel le module de vérification de mode de courant (131) est configuré pour produire une logique 1 lorsque la source de puissance (200) est un équipement de commande conventionnel (CCG) ou un équipement de commande électronique (ECG) ; et
le module de vérification de mode de tension (132) est configuré pour produire une logique 1 lorsque la source de puissance (200) est une source de puissance CA.

8. Dispositif de commande de puissance (100) selon une quelconque revendication précédente, dans lequel le loquet (133) est configuré pour produire une logique 1 lorsque le module de vérification de mode de courant (131) produit une logique 1.

9. Dispositif de commande de puissance (100) selon une quelconque revendication précédente, dans lequel le loquet (133) est un loquet SR.

10. Dispositif de commande de puissance (100) selon une quelconque revendication précédente, dans lequel le module de vérification de mode de courant (131) inclut :
un convertisseur courant/tension (1311) ; et
un comparateur de mode de courant (1312) présentant deux extrémités d'entrée (1312a, 1312b) raccordées au convertisseur courant/tension (1311) et à une tension de référence de mode de courant (Vrefc) respectivement, et une extrémité de sortie (1312c) raccordée au loquet (133).

11. Dispositif de commande de puissance (100) selon une quelconque revendication précédente, dans lequel le module de vérification de mode de tension (132) inclut :
un convertisseur tension/tension (1321) ; et
un comparateur de mode de tension (1322) présentant deux extrémités d'entrée (1322a, 1322b) raccordées au convertisseur tension/tension (1321) et à une tension de référence de mode de tension (Vrefv) respectivement, et une extrémité de sortie (1322c) raccordée au loquet (133).

12. Dispositif de commande de puissance (100) selon une quelconque revendication précédente, dans lequel le module de courant (120) inclut :
un raccordement en série d'une résistance (121) et d'une source de courant programmable (122) ; et
un condensateur (123) raccordé en parallèle au raccordement en série.

13. Dispositif de commande de puissance (100) selon une quelconque revendication précédente, dans lequel le module de filtrage (110) inclut un filtre EMI avec une impédance prédéfinie Z.

14. Dispositif de commande de puissance (100) selon l'une quelconque des revendications 2 à 13, dans lequel le dispositif de commande de puissance (100) présente une impédance d'entrée de plus de 500 000 ohms vue par le source de puissance CA, et
une impédance d'entrée entre 2 à 40 ohms vue par l'équipement de commande conventionnel (CCG) ou l'équipement de commande électronique (ECG).
